# EUROPÄISCHE PATENTANMELDUNG

(11) **EP 0 598 164 A1**
(43) Veröffentlichungstag der Anmeldung: **25.05.1994**
(21) Anmeldenummer: 92810886.9
(22) Anmeldetag: 13.11.1992
(51) Int. Cl.: D03C 9/00, D03C 1/14, F16B 2/06

(54) **Anordnung zum lösbaren Befestigen von zwei Gliedern sowie Schaftstange und Webmaschine mit einer derartigen Anordnung**

(71) Anmelder: SULZER RÜTI AG, CH-8630 Rüti (CH)
(72) Erfinder: Oertli, Gustav, CH-8311 Brütten (CH)

(57) **Zusammenfassung**

Die Anordnung dient zum lösbaren Befestigen eines ersten Gliedes (1), das im vorliegenden Ausführungsbeispiel (1b) als zylinderförmige Stange (1b) ausgebildet ist, mit einem zweiten Glied (2). Eine erste Ausnehmung (4a) bildet im zweiten Glied (2) einen Hohlraum (4). Zur Aufnahme der Stange (1b) weist das zweite Glied (2) eine zweite Ausnehmung (4b) auf, die an einander gegenüberliegenden Stellen in den Hohlraum (4) mündet. Im gelösten Zustand lässt sich die Stange (1b) im zweiten Glied (2) in Bewegungsrichtung (11) hin- und herbewegen, wobei zwischen der Ausnehmung (4b) und der Stange (1b), das heisst quer zur Bewegungsrichtung (11), wenig Spiel besteht. Im zweiten Glied (2) ist senkrecht zur Ausnehmung (4b) verlaufend eine weitere Ausnehmung (4c) eingelassen für ein rechtwinklig zur Stange (1b) gerichtetes, lösbares Befestigungselement (3), das zum Beispiel als Schraube (3a) ausführbar ist. Das Befestigungselement (3) tritt über die Auflagestelle (5) mit der Stange (1b) in Wirkverbindung, sodass eine Kraft (6) des Befestigungselementes (3) auf die Stange (1b) eingeleitet wird. Die eingeleitete Kraft (6) wird bei einer starre Stange (1b) über die Kräfte (6a) und (6b) im wesentlichen über zwei Kontaktflächen auf das zweite Glied (2) übertragen. Bei einer biegeelastischen Stange (1b) verursacht die eingeleitete Kraft (6) im wesentlichen vier Kräfte (6a), (6b), (6c) und (6d), die auf das zweite Glied (2) übertragen werden.

## Beschreibung

Die vorliegende Erfindung betrifft eine Anordnung gemäss dem Oberbegriff des Anspruches 1, sowie eine Schaftstange mit einer solchen Anordnung und eine Webmaschine mit einer derartigen Schaftstange.

In der JP-Gebrauchsmusterschrift Nr. 22294/91 ist eine Anordnung zum Verbinden einer Schaftstange mit einem Schafttrieb offenbart. Die Schaftstange enthält ein mit dem Winkelhebel verbundenes Vierkantrohr und eine im Vierkantrohr angeordnete Stange, die mittels zwei Schrauben und einem Klemmkörper an das Vierkantrohr befestigt ist. Die Stange liegt zwischen einer Innenfläche des Vierkantrohres und einer Oberfläche des Klemmkörpers und wird mittels der von den Schrauben erzeugten Klemmwirkung reibschlüssig befestigt.

Ziel der Erfindung ist eine Anordnung zum lösbaren Befestigen eines ersten Gliedes an ein das erste Glied aufnehmendes zweites Glied mittels eines im zweiten Glied vorgesehenen Befestigungselementes zu schaffen, bei der aufgrund der Eigenelastizität des ersten Gliedes eine höhere Reibkraft erzielt wird, wobei diese Anordnung einen einfachen Aufbau und Anwendung zeigt.

Dieses Ziel wird erfindungsgemäss mit den kennzeichnenden Merkmalen des Anspruches 1 erreicht.

Der mit der Erfindung erzielbare vorteil ist im wesentlichen darin zu sehen, dass die erzeugte verbindung mindestens drei Kontaktflächen aufweist.

Eine mit dieser Anordnung versehene Schaftstange ist erfindungsgemäss durch die Merkmale des Anspruches 11 gekennzeichnet.

Der Vorteil dieser Schaftstange besteht darin, dass aufgrund der biegeelastischen Stange eine verbindung mit fünf Kontaktflächen entsteht, so dass die Reibungskraft weiter erhöht wird.

Eine Webmaschine mit einer derartigen Schaftstange ist erfindungsgemäss durch die Merkmale des Anspruches 12 gekennzeichnet.

Der damit erzielbare Vorteil ist im wesentlichen darin zu sehen, dass eine einfache und sichere verbindung zwischen Schaftstange und Schafttrieb beziehungsweise Webschaft erreicht wird. Die Schaftstange lässt sich auf sehr einfache Weise trennen und verbinden, wobei die Länge der Schaftstange sehr einfach einstellbar ist. Die Verbindung ist massearm, in ihrer Ausführungsform sehr schmal und für Einstellarbeiten leicht zugänglich. Auf Grund der biegeelastischen Eigenschaften der Schaftstangen können Relativbewegungen zwischen Schafttrieb und webschaft in Kauf genommen werden, ohne dass zusätzliche gelenkige Verbindungen erforderlich sind.

Vorteilhafte Ausführungsformen der Erfindung ergeben sich aus den abhängigen Ansprüchen.

Im folgenden wird die Erfindung anhand der beiliegenden Zeichnungen erläutert.

Es zeigen:
- Fig. 1: einen Schnitt durch eine Ausführungsform einer erfindungsgemässen Anordnung,
- Fig. 2: eine räumliche Darstellung eines Teils einer Ausführungsform einer erfindungsgemässen Schaftstange mit der Anordnung gemäss Fig. 1,
- Fig. 3: eine räumliche Darstellung einer modifizierten Ausführungsform gemäss Fig. 2,
- Fig. 4: eine räumliche Ansicht eines Teils einer ersten Ausführungsform einer Webmaschine mit der Anordnung gemäss Fig. 1 und
- Fig. 5: eine räumliche Ansicht einer zweiten Ausführungsform einer webmaschine mit Anordnungen gemäss Fig. 1.

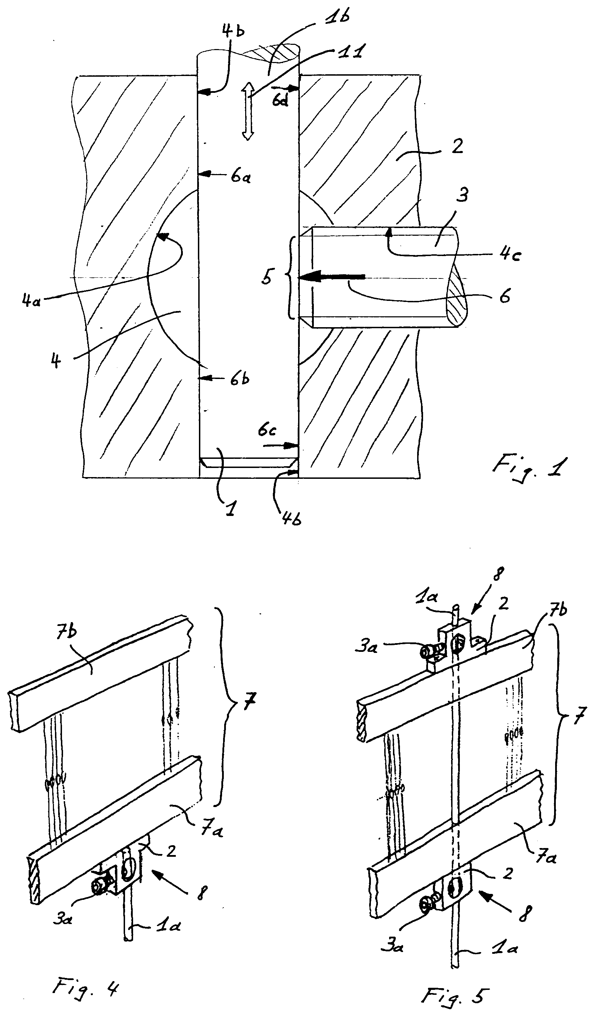

Fig. 1 zeigt eine Anordnung zum lösbaren Befestigen eines ersten Gliedes 1, das im vorliegenden Ausführungsbeispiel als Stange 1b, beispielsweise als zylinderförmige Stange 1b ausgebildet ist, mit einem zweiten Glied 2. Die Stange 1b kann auch andere Querschnittformen aufweisen, wie zum Beispiel oval oder vieleckig, insbesondere viereckig. Eine erste Ausnehmung 4a bildet im zweiten Glied 2 einen Hohlraum 4 mit einer Kontur aus der Gruppe kugelförmig, zylinderförmig, quaderförmig, polyederförmig oder Abschnitte davon. Zur Aufnahme der Stange 1b weist das zweite Glied 2 eine zweite Ausnehmung 4b auf, die an einander gegenüberliegenden Stellen in den Hohlraum 4 mündet, wobei die zweite Ausnehmung 4b eine Querschnittform aus der Gruppe rund, oval oder vieleckig aufweist, und wobei die Querschnittform der Ausnehmung 4b üblicherweise der Querschnittform des ersten Gliedes 1 bzw. der Stange 1b entspricht. Im vorliegenden Ausführungsbeispiel sind die erste Ausnehmung 4a und die zweite Ausnehmung 4b hohlzylinderförmig ausgebildet und so angeordnet, dass deren Achsen sich kreuzen und mittig verlaufen. Die Ausnehmung 4a und 4b sind gegenseitig mittig verlaufend angeordnet, wobei sie natürlich auch gegenseitig aussermittig verlaufend angeordnet sein können.
   Im gelösten Zustand lässt sich die Stange 1b im zweiten Glied 2 in Bewegungsrichtung 11 hin- und herbewegen, wobei zwischen der Ausnehmung 4b und der Stange 1b, das heisst quer zur Bewegungsrichtung 11, wenig Spiel besteht. Im zweiten Glied 2 ist senkrecht zur Ausnehmung 4b verlaufend eine weitere Ausnehmung 4c eingelassen für ein rechtwinklig zur Stange 1b gerichtetes, lösbares Befestigungselement 3, das zum Beispiel als Schraube 3a ausführbar ist. Das Befestigungselement 3 tritt über die Auflagestelle 5 mit der Stange 1b in Wirkverbindung, sodass eine Kraft 6 des Befestigungselementes 3 auf die Stange 1b eingeleitet wird. Die eingeleitete Kraft 6 wird bei einer starre Stange 1b über die Kräfte 6a und 6b im wesentlichen über zwei Kontaktflächen auf das zweite Glied 2 übertragen. Bei einer biegeelastischen Stange 1b verursacht die eingeleitete Kraft 6 im wesentlichen vier Kräfte 6a, 6b, 6c und 6d, die auf das zweite Glied 2 übertragen werden. Es entsteht somit eine Verbindung zwischen der Stange 1b, dem zweiten Glied 2 sowie dem Befestigungselement 3 mit mindestens drei beziehungsweise fünf Kontakflächen, was in Bewegungsrichtung 11 hohe Reigungskräft bewirkt.
   Die Kraft 6 kann natürlich auch in entgegengesetzter Richtung wirkend in das erste Glied 1 eingeleitet werden, indem das Befestigungselement 3 zum Beispiel im Bereich des Hohlraumes 4 eine Ausnehmung aufweist, die das erste Glied 1 umschliesst. Das Befestigungselement 3 bewirkt dabei eine Zugkraft auf das erste Glied 1. Das Befestigungselement 3 besteht in dieser Ausführungsform aus mindestens zwei Teilen, zum Beispiel einem Teil mit Ausnehmung zur Aufnahme des Gliedes 1 und mit einem Gewinde sowie dem zweiten Teil, einer Mutter, die auf der Oberfläche des zweiten Gliedes 2 aufliegend die Zugkraft ermöglicht.

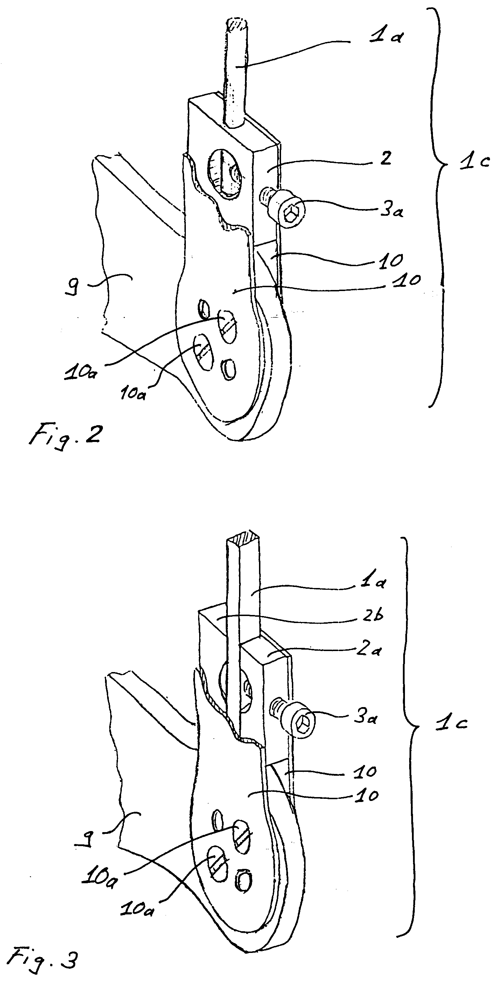

Fig. 2 zeigt eine Schaftstange 1c zum Auf- und Abbewegen eines Webschaftes 7 einer Webmaschine mit einer Anordnung zum lösbaren Befestigen der zylinderförmigen Stange 1a mit einem zweiten Glied 2 mittels einer Schraube 3a. Zwei Koppelglieder 10 sind mit dem zweiten Glied 2 verbunden, wobei die Koppelglieder 10 an ihrem entgegengesetzten Ende mittels lösbarer Verbindungsmittel 10a über ein nicht sichtbares Lagerteil drehbeweglich mit einem Schafttrieb 9 verbunden sind. Die Stange 1a, das zweite Glied 2 mit Schraube 3a sowie die beiden Koppelglieder 10 sind Teilkomponenten der Schaftstange 1c.
   Die Verwendung einer biegeelastischen Stange 1a ermöglicht eine Schaftstange 1c, mit der relativ grosse Kräfte in Bewegungsrichtung 11 auf den Webschaft 7 übertragbar sind.
Fig. 3 zeigt eine weitere Ausführungform einer Schaftstange 1c mit einer rechteckigen Stange 1a, wobei die Breite der Stange 1a ungefähr der Breite des zweiten Gliedes entspricht, sodass sich das zweite Glied in zwei beabstandete Teilglieder 2a, 2b teilt, die durch die beiden Koppelglieder 10 fest miteinander verbunden sind. Die beiden Koppelglieder 10 sind wiederum mittels lösbarer Verbindungsmittel 10a über ein nicht sichtbares Lagerteil drehbeweglich mit einem Schafttrieb 9 verbunden
Fig. 4 zeigt den Webschaft 7 einer Webmaschine mit unterem Rahmenteil 7a und oberem Rahmenteil 7b. Die eine Teilkomponente der Schaftstange 1c bildende Stange 1a ist über ein Kuppelungsteil 8 mit dem unteren Rahmenteil 7a verbunden. Das Kupplungsteil 8 kann auf unterschiedlichste Arten ausgeführt sein. Im dargestellten Ausführungsbeispiel besteht das Kupplungsteil 8 ebenfalls aus einem zweiten Glied 2 mit einer Schraube 3a als Befestigungselement.
   Der Webschaft 7 ist durch die an einem oder an beiden Enden der Schaftstange 1c befindlichen Glieder 2 mit Befestigungselement 3 auf einfache Weise vom Schafttrieb 9 lösbar. Die absolute Länge der Schaftstange 1c und somit die Lage eines Webschaftes 7 lässt sich durch die Glieder 2 mit Befestigungselement 3 ebenfalls auf einfache Weise verändern. Die elastischen Eigenschaften der Stange 1a erlauben gegenseitige Relativbewegungen der beiden zweiten Glieder 2, respektive Relativbewegungen zwischen Schafttrieb 9 und Webschaft 7, sodass auch bei grösseren Relativbewegungen auf Gelenkte verzichtet werden kann.
Fig. 5 zeigt einen weiteren Webschaft 7 einer Webmaschine. Die eine Teilkomponente der Schaftstange 1c bildende Stange 1a ist bis über den oberen Rahmenteil 7b verlängert. An der Stange 1a sind zwei Kuppelungsteile 8 derart angeordnet, dass der Webschaft 7 zwischen die beiden Kuppelungsteile 8 zu liegen kommt und mit diesen in Wirkverbindung steht. Die Kuppelungsteile 8 sind wiederum als zweites Glied 2 mit einer Schraube 3a als Befestigungsmittel 3 ausgeführt. Die Kuppelungsteile 8 können mit dem unteren Rahmenteil 7a bzw. dem oberen Rahmenteil 7b fest verbunden sein oder auch nur in einer losen Wirkverbindung auf den Webschaft 7 einwirken. So dient beispielsweise das mit dem unteren Rahmenteil 7a in Wirkverbindung stehende Kuppelungsteil 8 in einer vorteilhaften Ausführungsform dazu, die Höhe des Webschaftes 7 bezüglich der Stange 1a festzulegen. Zwischen diesem Kuppelungsteil 8 sowie dem unteren Rahmenteil 7a besteht dabei keine direkte Verbindung. Mit dem oberen Rahmenteil 7b ist in diesem Ausführungsbeispiel ein Kuppelungsteil 8 direkt verbunden. Bei einem Austausch eines Webschaftes 7 muss nur das mit dem oberen Rahmenteil 7b verbundene Kuppelungsteil 8 von der Stange 1a gelöst werden. Das auf den unteren Rahmenteil 7a wirkende Kuppelungsteil 8 bleibt fest mit der Stange 1a verbunden und definiert die Höhe des neu eingesetzten Webschaftes 7 bezüglich der Stange 1a.

## Patentansprüche

1. Anordnung zum lösbaren Befestigen eines ersten Gliedes (1) an ein das erste Glied aufnehmendes zweites Glied (2) mittels eines im zweiten Glied (2) vorgesehenen Befestigungselementes (3) dadurch gekennzeichnet, dass die Stelle (5) der Krafteinleitung innerhalb eines durch eine im zweiten Glied (2) ausgebildete Ausnehmung (4a) gebildeten Hohlraumes (4) liegt, der einen Abschnitt des ersten Gliedes (1) umgibt.

2. Anordnung nach Anspruch 1 dadurch gekennzeichnet, dass das Befestigungselement (3) mit dem ersten Glied (1) direkt in Wirkverbindung ist, derart, dass die Kraft (6) rechtwinklig zum ersten Glied (1) gerichtet ist.

3. Anordnung nach Anspruch 1 dadurch gekennzeichnet, dass die Ausnehmung (4a) eine Kontur ausgewählt aus der Gruppe kugelförmig, zylinderförmig, quaderförmig, polyederförmig oder Abschnitte davon hat.

4. Anordnung nach Anspruch 1 dadurch gekennzeichnet, dass das zweite Glied (2) ferner eine zur Aufnahme des ersten Gliedes (1) bestimmte zweite Ausnehmung (4b) aufweist, die an einander gegenüberliegenden Stellen in den Hohlraum (4) mündet.

5. Anordnung nach Anspruch 4 dadurch gekennzeichnet, dass die zweite Ausnehmung (4b) eine Querschnittform ausgewählt aus der Gruppe rund, oval oder vieleckig hat.

6. Anordnung nach einem der Ansprüche 4 oder 5 dadurch gekennzeichnet, dass die zweite Ausnehmung (4b) aussermittig bezüglich der ersten Ausnehmung (4a) angeordnet ist.

7. Anordnung nach einen der Ansprüche 4 bis 6 dadurch gekennzeichnet, dass die erste Ausnehmung (4a) und die zweite Ausnehmung (4b) hohlzylinderförmig ausgebildet und so angeordnet sind, dass deren Achsen sich kreuzen.

8. Anordnung nach einen der Ansprüche 1 bis 6 dadurch gekennzeichnet, dass das erste Glied (1) mit mindestens der halben Umfangsfläche an der Wandung der zweiten Ausnehmung (4b) satt anliegt.

9. Anordnung nach einen der Ansprüche 1 oder 2 dadurch gekennzeichnet, dass das erste Glied (1) eine Stange (1a) ist und, dass das Befestigungselement (3) eine Schraube (3a) ist.

10. Anordnung nach Anspruch 9 dadurch gekennzeichnet, dass die Stange (1a) biegeelastisch ist.

11. Schaftstange zum Auf- und Abbewegen eines Webschaftes (7) mit mindestens einer Anordnung nach einem der Ansprüche 1 bis 10 gekennzeichnet durch ein Koppelglied (10), das mit den Schafttrieb (9) drehbeweglich verbindhar ist, und durch eine biegeelastische Stange (1a), die an ihrem einem Ende mit den Koppelglied (10) fest verbunden ist.

12. Webmaschine mit Webschäften und Schaftstangen nach Anspruch 11 dadurch gekennzeichnet, dass die Schaftstange (1a) mindestens über einen Kupplungsteil (8), der mindestens aus einen zweiten Glied (2) und einem Befestigungselement (3) besteht, mit dem Webschaft (7) lösbar verbunden ist.

13. Webmaschine nach Anspruch 12, dadurch gekennzeichnet, dass der Kupplungsteil (8) am oberen Rahmenteil (7b) des Webschaftes (7) befestigt ist.

14. Webmaschine nach einem der Ansprüche 12 oder 13 dadurch gekennzeichnet, dass ein weiteres Kupplungsteil (8), das mit den unteren Rahmenteil (7a) des Webschaftes (7) in unmittelbarer Wirkverbindung steht, mit der Stange (1a) lösbar verbunden ist.
